# NEUE EUROPÄISCHE PATENTSCHRIFT

(11) **EP 1 147 383 B2**
(45) Veröffentlichungstag und Bekanntmachung des Hinweises auf die Entscheidung über den Einspruch: **08.09.2010**
(45) Hinweis auf die Patenterteilung: 06.10.2004
(21) Anmeldenummer: 99963566.7
(22) Anmeldetag: 17.12.1999
(51) Int. Cl.: G01G 19/04

(54) **WÄGEVORRICHTUNG FÜR SCHIENENFAHRZEUGE**
WEIGHING DEVICE FOR RAIL VEHICLES
DISPOSITIF DE PESAGE POUR VEHICULES SUR RAILS

(30) Priorität: 22.12.1998 DE 19861099
(43) Veröffentlichungstag der Anmeldung: 24.10.2001
(73) Patentinhaber: Schenck Process GmbH, 64293 Darmstadt (DE)
(72) Erfinder: GROLL, Peter, D-64297 Darmstadt (DE)
(74) Vertreter: Behrens, Helmut
(86) Internationale Anmeldenummer: PCT/EP1999/010028
(87) Internationale Veröffentlichungsnummer: WO 2000/037900

(56) Entgegenhaltungen:
- EP-A- 0 500 971
- EP-A- 0 500 971
- EP-B- 0 468 397
- EP-B- 1 121 573
- WO-A-00/23770
- DE-A- 4 444 337
- DE-A- 4 444 337
- DE-C- 4 439 342
- JP-A- 10 185 666
- US-A- 5 205 368
- FRITZ BIRMANN / JOSEF EISENMANN EISENBAHNTECHNISCHE RUNDSCHAU Nr. 5, 1966, Seite 155-164
- 'Dubbel Taschenbuch für den Maschinenbau', Seite 192-193
- 'Dubbel Taschenbuch für den Maschinenbau', Seite W14-W15
- 'Sensoren des Typs Gozinta' KATALOG DER FA. REVERE TRANSDUCERS EUROPE
- 'Norm-Schienenprofil der Deutschen Bahn'

## Beschreibung

Die Erfindung betrifft eine Wägevorrichtung für Schienenfahrzeuge gemäß dem Oberbegriff des Patentanspruchs 1.

Das Wägen von Schienenfahrzeugen wurde noch vor Jahren meistens mit Hilfe von Brückenwaagen durchgeführt, bei welchen das Gesamtgewicht eines einzelnen Eisenbahnwaggons statisch ermittelt wurde. Bei diesen Brückenwaagen waren die Schienen auf der Wägebrücke von den Fahrschienen der Gleisstrecke durch Spalte vor und hinter der Wägebrücke getrennt. Die Wägebrücke wurde auf mindestens vier Wägezellen gelagert und gegenüber einem Fundament abgestützt. Hierzu waren Wägebrücken in Waggonlänge notwendig, die einen sehr aufwendigen Brückenunterbau aus Beton- oder Stahlbauteilen erforderten.

Es sind aus der EP 0 500 971 A1 aber auch dynamische Wägeverfahren für Schienenfahrzeuge bekannt, die keinen aufwendigen Gleisunterbau erfordern. Dazu wird die Schubspannung in der neutralen Phase der Schiene erfaßt und ausgewertet. Hierzu wird in das Fahrschienennetz eine mit Dehnungsmeßstreifen applizierte Wägeschiene eingeschweißt, bei der zwischen den Schwellen mindestens zwei Dehnungsmeßstreifen angeordnet sind. Das Waggongewicht wird dabei durch achsweise Addition der Gewichtssignale ermittelt. Da die Radlast aber eine Durchbiegung der Schiene und der Schienenauflagerung bewirkt, bewegt sich der Zug normalerweise in einer unter der durch die unbelastete Schiene bestimmten Ebene gelegenen Ebene, während gleichzeitig durch die Durchbiegung der Schienen zwischen den Schwellen Schwingungen in vertikaler Ebene erzeugt werden. Dies führt beim Wiegen eines in Bewegung befindlichen Zuges zu Veränderungen der vertikalen Kräfte und damit zu Meßungenauigkeiten, die nur durch eine größere Anzahl von Meßstellen zu vermeiden sind. Im übrigen ist eine derartige Wägevorrichtung nur schwer zu kalibrieren, da hierzu statische Wägeeinrichtungen vorhanden sein müssen, die heute meist nur in großer räumlicher Entfernung vorhanden sind.

Aus der DE 44 44 337 A1 ist eine Wägeeinrichtung für Schienenfahrzeuge zur statischen und dynamischen Gewichtsbestimmung bekannt, bei der zwischen den Schienen und einem Querträger Kraftmeßzellen angeordnet sind, durch die die Achslast eines überfahrenden Eisenbahnwaggons ermittelt werden kann. Dabei sind die Schienen jeweils mit drei hintereinander angeordneten Aussparungen im Schienenfuß und -steg versehen, so daß sich die Schienen gelenkig auf den Kraftmeßzellen abstützten. Aufgrund dieser gelenkigen Abstützung der beiden Teilstücke einer jeden Schiene ist in jedem Fall ein aufwendiges Fundament oder eine Rahmenkonstruktion erforderlich, die die Achslast gegenüber dem Untergrund aufnimmt. Im übrigen bestehen die Querträger offensichtlich aus Doppel-T-förmigen Stahlträgern, die nicht ohne größere Umbauarbeiten in das Schienennetz eingebaut werden können.

Der Erfindung liegt deshalb die Aufgabe zugrunde, eine Wägeeinrichtung für Schienenfahrzeuge zu schaffen, die nur geringe bauliche Veränderungen im Schienennetz erfordert und mit der trotzdem eine hohe Genauigkeit erzielbar ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Es ist zwar schon sein 1988 bekannt, die Schotterverklebetechnik im Gleisbau anzuwenden, bei der mit einem Epoxidharz die Stabilisierung des Schotterbetts erreicht wird. Dabei wird das Epoxidharz mit einem Härter auf das Schotterbett aufgespritzt, das durch seine Viskosität in dieses eindringt und die Berührungsflächen der Schottersteine miteinander verklebt. Diese Schotterverklebetechnik wird im Gleisbau aber hauptsächlich nur zum Schutz vor Schotterflug und zur stetigen Erhöhung der Stabilisierung an Übergangsbereichen zwischen Schotterfahrbahn und fester Fahrbahn eingesetzt. Es ist jedenfalls nicht bekannt, die Schotterverklebung zur Abstützung einer Wägebrücke vorzusehen.

Die Erfindung hat den Vorteil, daß durch die Kraftmessung mittels Wägeschwellen sowohl eine statische als auch eine dynamische Gewichtsmessung von Schienenfahrzeugen ermöglicht wird. Insbesondere ist eine derartige Meßeinrichtung auf einfache Weise auch für eine dynamische Gewichtsermittlung kalibrierbar, ohne daß dabei eine weit entfernte Brückenwaage herangezogen werden müßte.

Besonders vorteilhaft ist bei dieser Erfindung, daß die gesamte Wägevorrichtung nur aus einer oder mehrerer Wägeschwellen besteht, die im normalen Schottergleisbett wie andere Schwellen eingebaut werden können. Dabei entfallen notwendige Transportprobleme von langen Gleisstücken oder von Beton- bzw. Stahlbauteilen, wie sie für statische Brückenwaagen sonst notwendig sind.

Weiterhin hat die Erfindung den Vorteil, daß die gesamte Meßtechnik in heute gebräuchlichen Betonschwellen beim Herstellungsprozeß ohne großen Mehraufwand eingegossen werden kann. Durch derartig vorgefertigte Wägeschwellen können dann auf einfache Art und Weise variable Brückenlängen zusammengestellt werden, mit beispielsweise einer Wägeschwelle für eine Einachswägung oder mit acht Wägeschwellen für ein Dreiachsdrehgestell oder von vierzig Wägeschwellen für eine komplette hochgenaue Waggonwägung.

Beim Einsatz derartiger Wägeschwellen ist insbesondere auch die Servicefreundlichkeit von Vorteil, da bei Defekten an der Sensorik schlimmstenfalls die ganze Wägeschwelle wie jede andere Gleisschwelle ausgetauscht werden muß. Allerdings sind die Wägezellen in den Wägeschwellen auch so ausführbar, daß diese einzeln auswechselbar sind, weil diese stets von oben oder von der Seite eingebaut werden und so gut zugänglich sind.

Weiterhin ist bei der Erfindung von Vorteil, daß die Wägeschwelle in einem verklebten Schotterbett eingeklebt wird, wobei keinerlei Brückenkonstruktion mehr notwendig ist, wie sonst bei Beton- oder Stahlbrücken. Insbesondere können bei einer derartigen Stabilisierung des Untergrunds Steifigkeitssprünge wie bei Beton- oder Stahlbrücken vermieden werden, da in einem definierten An- und Abfahrbereich eine kontinuierliche Versteifungserhöhung bzw. -verminderung erfolgt, so daß die gleislagebedingten Anregungen zu Waggonstörschwingungen während des Wägevorgangs minimiert werden.

Bei einer besonderen Ausgestaltung der Erfindung mit Schubdehnungssensoren und/oder Aussparungen im Schienenfuß kann die Kraftnebenschlußwirkung durch den unterbrechungsfreien Schienenstrang korrigiert bzw. reduziert werden. Dadurch werden auch gleichzeitig Schienenschalter entbehrlich, die zur Feststellung des Waggontypes bei der Fahrtwägung sonst notwendig sind.

Bei einer weiteren besonderen Ausgestaltung der Erfindung mit Kraftmeßvorrichtungen mit einer Kraftrückführung ist insbesondere vorteilhaft, daß durch diese Meßvorrichtung die Gewichtskraft auch dann noch sehr genau ermittelt werden kann, wenn sich der Krafteinleitungsschwerpunkt horizontal verschiebt und/oder zusätzlich Störkräfte und Störmomente - wie bei Gleisanlagen üblich - übertragen werden müssen.

Die Erfindung wird anhand eines Ausführungsbeispiels, das in der Zeichnung dargestellt ist, näher erläutert. Es zeigen:
- Fig. 1:: eine schematische Wägevorrichtung mit zwei Wägeschwellen und
- Fig. 2:: einen Ausschnitt aus einer Wägeschwelle mit einer unter einer Schiene angeordneten Kraftmeßvorrichtung.

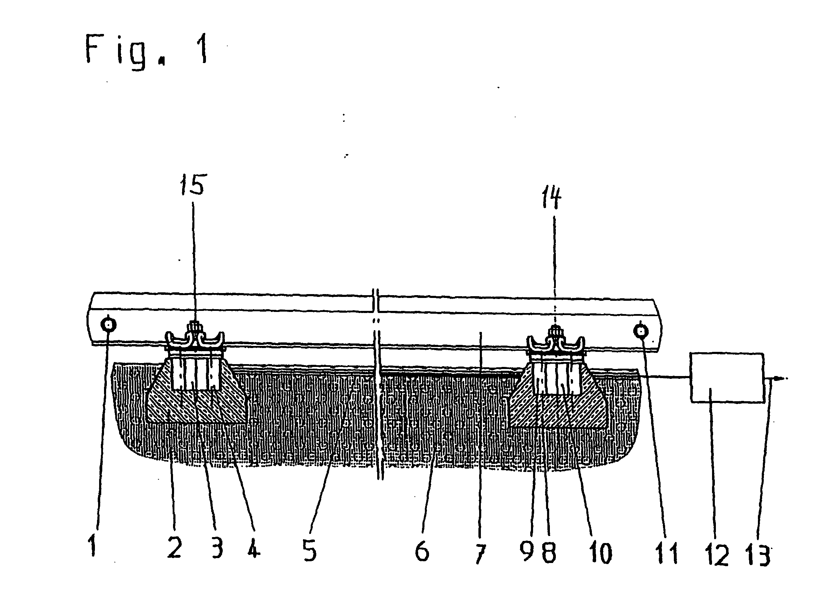

In Fig. 1 der Zeichnung ist eine Wägevorrichtung für Schienenfahrzeuge mit zwei eingeklebten Wägeschwellen 2, 8 als Querträger in einem verklebten Schotterbett 6 dargestellt, wobei am Beginn und am Ende der Meßstrecke in jeder Schiene jeweils ein Meßauge 1, 11 als Schubspannungssensor zur Kraftnebenschlußkorrektur im Bereich des Schwellenfachs vorgesehen ist.

Die beiden Wägeschwellen 2, 8 sind in einem Schotterbett 6 angeordnet, wie es als Fahrschienenweg im Eisenbahnbau üblich ist. In diesem Schotterbett 6 sind die beiden Wägeschwellen 2, 8 wie andere Schwellen quer zur Fahrtrichtung parallel nebeneinander angeordnet, wobei diese von den das Schotterbett 6 darstellenden Steinen umgeben sind. Zur Verfestigung sind die Schottersteine mit einem Zweikomponentenkleber auf Epoxidharzbasis mit Härter besprüht, so daß eine Schotterverklebung durch den flüssigen, in das Schotterbett 6 eindringenden Kleber entsteht. Dabei erfolgt ebenso eine Verklebung der Wägeschwellen 2, 8 mit den Schottersteinen. Diese Schotterverklebung ist bisher bei Gleisbauarbeiten zum Schutz vor Schotterflug auf Hochgeschwindigkeitsstrecken und zur Stabilisierung an Übergangsbereichen zwischen Schotterfahrbahnen und festen Fahrbahnen üblich. Vielfach wird eine derartige Schotterverklebung auch bereits zur Stabilisierung an Weichen und Fahrbahnrändern in Bahnhöfen vorgesehen.

Im Bereich der Wägevorrichtung hat sich eine Schotterverklebung als vorteilhaft erwiesen, die ca. eine Waggonlänge vor und eine Waggonlänge nach der oder den Wägeschwellen 2, 8 vorgenommen wird und je nach Belastung bis zu einer Tiefe von 0,5 m erfolgen soll. Dabei verkleben die Schottersteine an ihren Berührungspunkten oder Kanten miteinander, so daß ein festes stabilisiertes Schotterbett 6 entsteht. Die Stabilisierung des Schotterbetts 6 ist dabei von der Menge und der Eindringtiefe des Zweikomponentenklebers abhängig. Es sind somit unterschiedliche Stabilisierungsgrade des Schotterbetts herstellbar, so daß insbesondere eine stetige Erhöhung der Versteifung oder Verfestigung am Beginn und/oder eine stetige Verringerung am Ende der Wägevorrichtung vorteilhaft ist. In diesem stabilisierten Schotterbett 6 sind die Wägeschwellen 2, 8 mit diesem verklebt, so daß auch eine kraftschlüssige Verbindung zwischen den Wägeschwellen 2, 8 und dem Schotterbett 6 entsteht.

Die Wägeschwellen 2, 8 sind in wesentlichen wie normale Schwellen ausgebildet nur mit dem Unterschied, daß in ihnen die Kraftmeßvorrichtungen integriert sind. Dabei bestehen die Wägeschwellen 2, 8 wie die übrigen Schienenschwellen vorzugsweise aus armiertem Beton und werden in einem Betongießverfahren hergestellt. Die Wägeschwellen 2, 8 können aber auch aus anderen zur Herstellung von Schwellen geeigneten Werkstoffen gefertigt werden.

In die Betonschwellen werden im Bereich der Schienenauflagerpunkte Aussparungen 4, 9 vorgesehen, in denen die Kraftmeßvorrichtung 3, 10 einsetzbar ist. Die Kraftmeßvorrichtung 3, 10 kann aber auch in einem vorgefertigten Gehäuse fest eingebaut sein, das mit in die Betonschwellen eingegossen wird. Gleichzeitig sind in den Wägeschwellen 2, 8 auch Kabelkanäle 25 vorgesehen, in denen die Verkabelung der Meßeinrichtung geführt wird. Vorzugsweise werden diese Kabelkanäle 25 von den Aussparungen 4, 9 der Kraftmeßvorrichtung 3, 10 bis zur Schwellenmitte vorgesehen und enden dort in einer weiteren Aussparung 24, in der die Verschaltung vorgenommen wird. In diese Aussparung 24 können aber auch gleichzeitig elektronische Schaltungen zur Meßwertverarbeitung und Stromversorgung untergebracht sein. Diese Verschaltungsaussparung 24 jeder Wägeschwelle 2, 8 ist mit den anderen Wägeschwellen über einen Verbindungskanal 5 verbunden, der diese Einrichtungen an eine zentrale Auswertevorrichtung 12 heranführt.

Die in den Aussparungen 4, 9 vorgesehenen Kraftmeßvorrichtungen 4, 10 sind an ihrer Oberseite mit Verbindungselementen versehen, die mit der darüberliegenden Schiene 7 eine feste Verbindung herstellen. Vorzugsweise sind hierzu Klemmverbindungen 15, 14 vorgesehen, wie sie auch zur Verbindung der Schienen 7 an den übrigen Schwellen üblich sind. Allerdings können auch andere Verbindungselemente vorgesehen werden, wenn dies aufgrund der Konstruktion der Kraftmeßvorrichtung 3, 10 notwendig oder vorteilhaft ist.

Die Schienen 7 sind im Bereich der Wägevorrichtung unterbrechungsfrei ausgebildet und stellen übliche Fahrschienen dar. Die gesamte Wägevorrichtung wird vorzugsweise aus sechs bis acht Wägeschwellen 2, 8 gebildet, die zur Wägung von Eisenbahnwaggons oder anderen Schienenfahrzeugen mit bis zu dreiachsigen Drehgestellen geeignet sind und eine Meßstrecke von 4 bis 5 m umfassen. In dem beschriebenen Ausführungsbeispiel sind aus Gründen der Übersichtlichkeit allerdings nur zwei Wägeschwellen 2, 8 dargestellt. Zur Gewichtsermittlung von Schienenfahrzeugen mit nur zwei Achsen wären allerdings auch Wägevorrichtungen mit nur einer Wägeschwelle 2, 8 ausreichend.

Bei besonderen Genauigkeitsanforderungen und zur statischen Wägung von kompletten Eisenbahnwaggons können auch Wägevorrichtungen mit vierzig Wägeschwellen 2, 8 bei einer Meßstrecke von 25 m vorgesehen werden.

Zur Korrektur der Kraftnebenschlußwirkung ist am Anfang und/oder am Ende der Meßstrecke in der Mitte zwischen der ersten bzw. letzten Wägeschwelle 2, 8 und der benachbarten Schwelle ein sogenanntes Meßauge 11 als Schubspannungssensor in der neutralen Faser jeder Schiene 7 vorgesehen. Durch ein derartiges Meßauge 11 ist auf einfache Art und Weise die Schubspannung meßbar, die beim Überrollen einer Fahrzeugachse in der neutralen Faser jeder Schiene 7 auftritt. Dabei haben sich derartige Meßaugen 11 als vorteilhaft erwiesen, da sie als kreisförmige Aufnehmereinheit mit Dehnungsmeßstreifen ausgebildet sind. Diese Meßaugen 11 können vorteilhafterweise in einer Bohrung in der neutralen Faser jeder Schienen auf einfache Art befestigt werden. Derartige Schubspannungsaufnehmer 11 können aber auch anders ausgebildet sein, beispielsweise können sie auch direkt am Schienensteg appliziert werden.

Diese Schubspannungsaufnehmer 11 erfassen eine Kraft beim Überfahren der Achse eines Schienenfahrzeugs entsprechend der Kraftnebenschlußwirkung, die das Wägeergebnis verfälscht, das durch die Kraftmeßvorrichtungen 3, 10 in den Wägeschwellen 2, 8 gemessen wird. Diese Verfälschung durch die Kraftnebenschlußwirkung ist um so größer, je stärker diese Kopplung zur Kraftmeßvorrichtung 3, 10 ist. Soweit nur eine Wägeschwelle 2, 8 vorgesehen ist, entsteht ein relativ großer Kraftnebenschlußfehler. Bei einer Wägevorrichtung mit mehreren Wägeschwellen 2, 8 verringert sich dieser Kraftnebenschlußfehler entsprechend.

Durch die vorgenannte Ermittlung der Schubspannung kann dieser Fehler aber durch eine entsprechende Kalibrierung korrigiert werden. Dazu werden sowohl die Signale der Schubspannungssensoren 11, 1 als auch der Kraftmeßvorrichtungen 3, 10 jeder Wägeschwelle 2, 8 einer zentralen Auswertevorrichtung 12 zugeführt. Mit Hilfe einer oder mehreren bekannter Referenzmassen oder Referenzkraftwirkungen (z. B. durch ein Prüfgerät) kann die Wägevorrichtung zunächst statisch kalibriert werden. Dabei erfolgt auch die Erfassung der ortsabhängigen Kraftnebenschlußwirkung mittels der Schubspannungssensoren 1, 11. Hierzu wird eine Referenzmasse oder das Prüfgerät an verschiedenen Positionen der Meßstrecke aufgesetzt. Alternativ kann dieser Vorgang auch mit bewegter Referenzmasse automatisiert durchgeführt werden. In der zentralen Auswertevorrichtung 12 werden die aus den Schubspannungsmessungen des Kalibriervorgangs abgeleiteten Korrekturfunktionen abgespeichert. Nachfolgend können für unbekannten Massen die statischen Gewichte ermittelt werden. Mit diesen Gewichten wiederum kann die Wägevorrichtung dynamisch kalibriert werden. Die dabei ermittelten dynamischen Korrekturfunktionen werden ebenfalls in der zentralen Auswerteeinrichtung 12 gespeichert. Es ist also möglich, eine derartige Wägevorrichtung auf einfache Weise mit bekannten Referenzmassen oder einem Prüfgerät, sowie weiteren unbekannten Massen statisch und dynamisch zu kalibrieren. Das so kalibrierte Wägesignal in der zentralen Auswerteeinrichtung 12 kann an dessen Ausgang zur Weiterverarbeitung oder zur Anzeige von einer weiteren Einrichtung abgefragt oder angezeigt werden.

Allerdings ist die Kraftnebenschlußwirkung auch durch eine Aussparung im Schienenfuß und -steg so weit verringerbar, daß deren Einfluß auf das Meßergebnis nur unwesentlich ist. Dazu wird vor der ersten Wägeschwelle 8 eine Aussparung im Schienenfuß und -steg eingearbeitet, der den Überfahrteil aber nicht unterbricht, so daß eine gelenkige Ankopplung entsteht. Dabei ist die Kraftnebenschlußwirkung umso geringer, je weiter dieses Gelenk von der ersten Meßschwelle 8 lagerfrei entfernt ist und je weniger Biegespannung durch das Gelenk übertragen wird. Da in diesem Gelenk aber eine bestimmte Scherspannung nicht überschritten werden darf, um beim Überfahren mit einer zulässigen Last nicht beschädigt zu werden, kann eine bestimmte Kraftnebenschlußwirkung nicht verhindert werden. Als besonders vorteilhaft hat sich deshalb herausgestellt, zusätzlich zur Erfassung der Schubspannung in jeder Schiene auch eine Aussparung vorzusehen, damit insbesondere bei kleinen Überfahrlasten noch eine genaue Fahrtwägung bei möglichst geringer Brückenlänge erreichbar ist. Dabei kann das Meßergebnis insbesondere noch dadurch verbessert werden, daß sowohl am Anfang als auch am Ende der Meßstrecke eine Aussparung und eine Schubspannungsmessung vorgenommen wird.

Die Schubspannungssensoren 1, 11 werden gleichzeitig als Schienenschalter verwandt. Dazu wird mit Hilfe vorgegebener Achsabstände bekannter Schienenfahrzeuge durch die zentrale Auswertevorichtung 12 jeweils der Anfang und das Ende eines überfahrenden Fahrzeugs bestimmt. Aus den bekannten und gemessenen Achsabständen ist dann in der Auswertevorrichtung 12 das Fahrzeuggewicht bestimmbar.

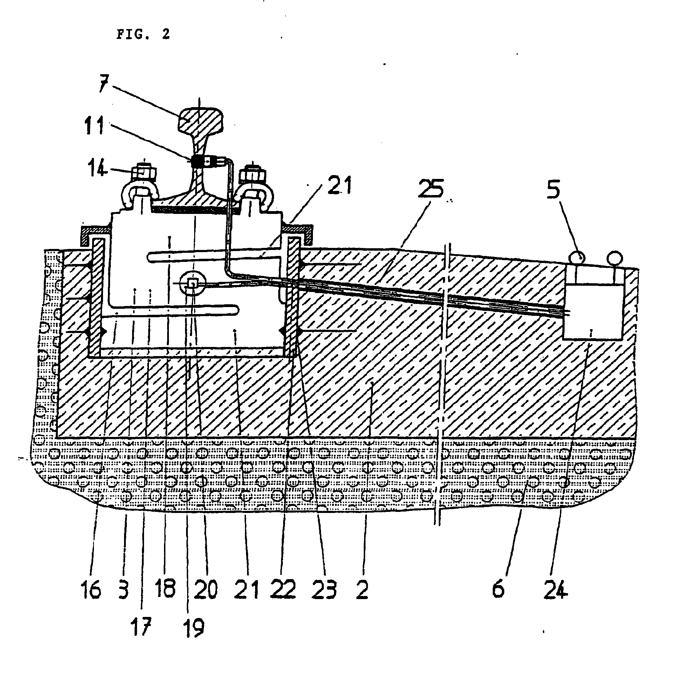

In Fig. 2 der Zeichnung ist eine Kraftmeßvorrichtung 3 als Schnittbild eines Ausschnitts einer Wägeschwelle 2 im einzelnen dargestellt. Dabei sind die gleichen Bezugszeichen verwandt worden, wie sie für funktionsgleiche Teile der Fig. 1 der Zeichnung verwendet wurden. Die Wägeschwelle 2 enthält dabei eine Kraftmeßvorrichtung 3, die fest in einem eingegossenen Gehäuse 22 angeordnet ist. Zweckmäßigerweise enthält diese Gehäuseeinheit 22 Armierungselemente 23, die eine unlösbare Verbindung mit der armierten Betonschwelle 2 gewährleisten. In diesem Gehäuseteil 22 ist eine Kraftmeßeinrichtung 3 als Wägezelle vorgesehen, die unterhalb der Schiene 7 angeordnet ist. Diese Wägezelle 3 enthält ein Krafteinleitungsteil 18, einen Verformungskörper 17, an dem Dehnungsmeßstreifen 20 appliziert sind und einen Kraftausleitungsteil 21, der fest mit dem Gehäuse 22 befestigt ist. Diese Wägezelle 3 ist s-förmig ausgebildet, so daß die Krafteinleitungsteile 18 und die Kraftausleitungsteile 21 gleichzeitig als Kraftrückführungselemente ausgebildet sind. Dabei werden das Krafteinleitungs-18 und das Kraftausleitungselement 21 durch horizontale Schlitze 16, 26 vom Verformungsteil 17 getrennt. Das Verformungsteil 17 enthält im Zentrum zwei entgegengerichtete horizontale Sackbohrungen 19, so daß zwischen beiden Bohrungen eine vertikale Verformungsfläche verbleibt, an der die Dehnungsmeßstreifen 20 appliziert sind. Diese erzeugen ein dem Gewicht auf der Schiene 7 proportionales Signal.

Am Krafteinleitungsteil 18 sind Stege mit Klemmelementen 14 vorgesehen, zwischen denen die Schiene 7 quer zur Wägezelle 3 verläuft und fest mit dieser verschraubt ist. Dabei sind Wägezellen 3 mit Kraftrückführungselementen 18, 21 vorteilhafterweise vorgesehen, da bei diesen die gemessene Kraft weitgehend unabhängig vom Krafteinleitungsort ist, so daß Schwerpunktverschiebungen auf der Schiene 7 keinen Einfluß auf das Meßergebnis haben. Es sind deshalb vorteilhafterweise auch Wägebalken mit Kraftrückführungselementen verwendbar, wobei die Schiene 7 an einem oberen Kraftrückführungselement befestigt würde, während ein unteres Kraftrückführungselement fest mit dem Gehäuse 22 zu verbinden wäre.

Die Kraftmeßeinrichtungen 3, 10 können auch so ausgebildet sein, daß sie mit dem Gehäuse 22 durch eine lösbare Verbindung befestigt sind. Insbesondere können hierzu vorteilhafterweise Schraubverbindungen vorgesehen werden, so daß die einzelnen Meßvorrichtungen 3, 10 im Schadensfall nach Anheben der Schiene 7 einzeln von oben ausgetauscht werden können. Das Gehäuse 22 der Kraftmeßvorrichtungen 3, 10 könnte auch bis an das Schwellenende herangeführt werden und mit einem lösbaren Seitenteil versehen sein, so daß die Kraftmeßvorrichtungen 3, 10 auch vorteilhafterweise seitlich ausgetauscht werden könnten, ohne die Schiene 7 anheben zu müssen.

In Längsrichtung der Wägeschwelle 2 ist ein horizontaler Kabelkanal 25 vorgesehen, in dem die Verdrahtung zu den Dehnungsmeßstreifen 20 und den Meßaugen 1, 11 beschädigungssicher geführt ist. Der Kabelkanal 25 endet in der Mitte der Wägeschwelle 2, 8 in einer Verschaltungsaussparung 24, in der zusätzlich noch elektrische Schaltkreise angeordnet sind, die zur Speisung und zur entfernungsunabhängigen Meßsignalumwandlung (A/D-Wandler) dienen.

Oberhalb der Verschaltungsaussparung 24 ist in Schienenrichtung ein rohrförmiger Verbindungskanal 5 vorgesehen, durch den die Wägeschwellen 2, 8 miteinander und mit einer zentralen Auswertevorrichtung 12 elektrisch verbunden sind.

## Patentansprüche

1. Wägevorrichtung für Schienenfahrzeuge bei der zwischen mindestens einer Fahrschiene und mindestens einem Querträger mindestens eine Kraftmeßvorrichtung angeordnet ist, die eine Meßstrecke bildet, die ein Signal erzeugt, das der auf der Schiene befindlichen Last proportional ist, **dadurch gekennzeichnet, daß** vor der ersten und nach der letzten Kraftmeßvorrichtung-(3, 10) der Messtrecke an der einen Fahrschiene (7) mindestens ein zusätzlicher Schubspannungssensor (1, 11) in der neutralen Faser der Schiene (7) zur Ermittlung der Kraftnebenschlußkopplung angeordnet ist, dessen Meßsignale zur Korrektur der Kraftnebenschlußkopplung dienen.

2. Wägevorrichtung nach Anspruch 1, **dadurch gekennzeichnet, daß** aufgrund der Schubspannungsmessung und einer statischen Kalibrierung in einer Auswertevorrichtung (12) eine ortsabhängige Korrekturfunktion gebildet und gespeichert wird, die bei der dynamischen Wägung zur Berücksichtigung der Kraftnebenschlußkopplung dient.

3. Wägevorrichtung nach einem der vorhergehenden Ansprüche, **dadurch gekennzeichnet, daß** als Kraftmeßvorrichtungen (3, 10) Wägezellen (3) vorgesehen sind, deren Wägesignale so miteinander verknüpft sind, daß aus den Meßsignalen das Gewicht der Schienenfahrzeuge oder Teilen davon ermittelbar ist.

4. Wägevorrichtung nach einem der vorhergehenden Ansprüche, **dadurch gekennzeichnet, daß** die Signale mindestens eines Schubspannungssensors (11) gleichzeitig als Schienenschalter dient, aus denen in der Auswertevorrichtung (12) und mit Hilfe vorgegebener Achsabstände ein Waggonanfang und -ende oder ein Drehgestellanfang oder -ende bestimmt wird.

5. Wägevorrichtung nach einem der vorhergehenden Ansprüche, **dadurch gekennzeichnet, daß** der Schubspannungssensor (11) als Meßauge ausgebildet ist, das in einer Bohrung der Schiene (7) angeordnet ist oder durch direkt applizierte Dehnungsmeßstreifen gebildet wird.

6. Wägevorrichtung nach einem der vorhergehenden Ansprüche, **dadurch gekennzeichnet, daß** mindestens vor der ersten Kraftmeßvorrichtung (3, 10) im Schienenfuß eine vertikale oder schräge nach unten offene Aussparung vorgesehen ist, die die Fahrschiene (7) gelenkig mit der oder den Kraftmeßvorrichtungen (3, 10) verbindet.

7. Wägevorrichtung nach einem der vorhergehenden Ansprüche, **dadurch gekennzeichnet, daß** mindestens vor der ersten und/oder der letzten Kraftmeßvorrichtung (3, 10) eine vertikale oder schräge nach unten offene Aussparung im Schienenfuß vorgesehen ist, die die Fahrschiene (7) gelenkig mit der oder den Kraftmeßvorrichtungen (3, 10) verbindet.

8. Wägevorrichtung nach einem der vorhergehenden Ansprüche, **dadurch gekennzeichnet, daß** die Kraftmeßvorrichtung (3, 10) für jede Schiene (7) zwischen der betreffenden Schiene (7) und einem Querträger angeordnet ist.

9. Wägevorrichtung nach einem der vorhergehenden Ansprüche, **dadurch gekennzeichnet, daß** der Querträger als Wägeschwelle (2, 8) ausgebildet ist, in dem die Kraftmeßvorrichtungen (3, 10) integriert sind und sich auf einem stabilisierten Untergrund abstützen.

10. Wägevorrichtung nach einem der vorhergehenden Ansprüche, **dadurch gekennzeichnet, daß** die Wägevorrichtung aus mindestens einer Wägeschwelle (2, 8) oder einer Vielzahl von Wägeschwellen (2, 8) besteht.

11. Wägevorrichtung nach einem der vorhergehenden Ansprüche, **dadurch gekennzeichnet, daß** die Wägeschwelle (2, 8) aus armiertem Beton oder aus einem anderen zur Herstellung von Schwellen vorgesehenen Werkstoff besteht.

12. Wägevorrichtung nach einem der vorhergehenden Ansprüche, **dadurch gekennzeichnet, daß** jede Wägeschwelle (2, 8) mindestens zwei Aussparungen (4, 9) zur Integration der Kraftmeßvorrichtungen (3, 10) enthält, die unterhalb der Schienenlagerung vorgesehen sind.

13. Wägevorrichtung nach einem der vorhergehenden Ansprüche, **dadurch gekennzeichnet, daß** in den Aussparungen (4, 9) Kraftmeßvorrichtungen (3, 10) angeordnet sind, deren Krafteinleitungsteil (18) mit der Schiene (7) und deren Kraftausleitungsteil (21) kraftschlüssig und momentenschlüssig mit der schwelle (2, 8) verbunden ist.

14. Wägevorrichtung nach einem der vorhergehenden Ansprüche, **dadurch gekennzeichnet, daß** die Kraftmeßvorrichtung (3, 10) in einem festen Gehäuseteil (22) befestigt ist, das mit der Schwelle (2, 8) vergossen oder durch andere Verbindungsmittel fest verbunden ist.

15. Wägevorrichtung nach einem der vorhergehenden Ansprüche, **dadurch gekennzeichnet, daß** die Kraftmeßvorrichtung (3, 10) durch eine lösbare Verbindung mit dem Gehäuseteil (22) verbunden ist, wobei das Gehäuseteil (22) über ein oberes oder seitlich abnehmbares Verschlußteil verfügt, durch den die Kraftmeßvorrichtung (3, 10) auswechselbar ist.

16. Wägevorrichtung nach einem der vorhergehenden Ansprüche, **dadurch gekennzeichnet, daß** die Kraftmeßvorrichtung (3, 10) als Wägezelle mit Kraftrückführungselementen (18, 21) ausgebildet ist.

## Claims

1. Weighing device for rail vehicles in which at least one load measuring device is disposed between at least one running rail and at least one crossbeam and forms a measuring section that generates a signal proportional to the load occurring on the rail, **characterized in that** at least one additional shear stress sensor (1, 11) is arranged at one of the running rails (7) in the neutral axis of the rail (7) for determining the load shunt coupling, upstream the first and downstream the last load measuring device (3, 10) of the measuring section, the measurement signals of which are used to correct the load shunt coupling.

2. Weighing device according to claim 1, **characterized in that** on the basis of the shear strain measurement and a static calibration in a central evaluation device (12) a location-dependent correction function is generated and stored, which during dynamic weighing is used to take the load shunt coupling into account.

3. Weighing device according to claim 1 or 2 , **characterized in that** as load measuring devices (3, 10) load cells (3) are provided, the weighing signals of which are combined with one another in such a way that from the measurement signals the weight of the rail vehicles or parts thereof is determinable.

4. Weighing device according to one of the preceding claims, **characterized in that** the signals of at least one shear strain sensor (11) is used simultaneously as rail switches, from which in the evaluation device (12) and with the aid of defined distances between axles the beginning and end of a wagon or the beginning and end of a bogie is determined.

5. Weighing device according to one of the preceding claims, **characterized in that** the shear strain sensor (11) is designed as a measuring eye, which is disposed in a bore of the rail (7) or is formed by directly fitted strain gauges.

6. Weighing device according to one of the preceding claims, **characterized in that** at least in front of the first load measuring device (3, 10) there is provided in the rail foot a vertical or obliquely downwardly open recess, which connects the running rail (7) in an articulated manner to the load measuring device or devices (3, 10).

7. Weighing device according to one of the preceding claims, **characterized in that** at least in front of the first and/or the last load measuring device (3, 10) there is provided in the rail foot a vertical or obliquely downwardly open recess, which connects the running rail (7) in an articulated manner to the load measuring device or devices (3, 10).

8. Weighing device according to one of the preceding claims, **characterized in that** the load measuring device (3, 10) for each rail (7) is disposed between the relevant rail (7) and a crossbeam.

9. Weighing device according to one of the preceding claims, **characterized in that** the crossbeam is designed as a weighing sleeper (2, 8), in which the load measuring devices (3, 10) are integrated and supported on a stabilized subsurface.

10. Weighing device according to one of the preceding claims, **characterized in that** the weighing device comprises at least one weighing sleeper (2, 8) or a plurality of weighing sleepers (2, 8).

11. Weighing device according to one of the preceding claims, **characterized in that** the weighing sleeper (2, 8) is made of reinforced concrete or of another material provided for the manufacture of sleepers.

12. Weighing device according to one of the preceding claims, **characterized in that** each weighing sleeper (2, 8) contains at least two recesses (4, 9) for integration of the load measuring devices (3, 10), which are provided underneath the rail bearing arrangement.

13. Weighing device according to one of the preceding claims, **characterized in that** disposed in the recesses (4, 9) are load measuring devices (3, 10), of which the load introduction part (18) is connected to the rail (7) and the load output part (21) is connected in a force- and torque-transmitting manner to the sleeper (2, 8).

14. Weighing device according to one of the preceding claims, **characterized in that** the load measuring device (3, 10) is fastened in a fixed housing part (22), which is cast with the sleeper (2, 8) or is firmly connected thereto by other connection means.

15. Weighing device according to one of the preceding claims, **characterized in that** the load measuring device (3, 10) is connected by a detachable connection to the housing part (22), wherein the housing part (22) has an upper or laterally removable closure part, by means of which the load measuring device (3, 10) is exchangeable.

16. Weighing device according to one of the preceding claims, **characterized in that** the load measuring device (3, 10) is designed as a load cell with load feedback elements (18, 21).

## Revendications

1. Dispositif de pesage pour véhicules sur rails, où, entre non moins d'un rail de roulement et non moins d'une traverse, est disposé un capteur dynamométrique, qui forme une section mesurée émettant un signal proportionnel à la charge exercée sur le rail, **caractérisé en ce que** en amont du premier et en aval du dernier capteur dynamométrique (3, 10) de la section mesurée du rail de roulement (7), au moins un capteur de contrainte au cisaillement additionnel (1, 11) est placé sur l'axe neutre du rail (7) pour déterminer le couplage de dérivation de force, dont les signaux de mesure servent à la correction du couplage de dérivation de force.

2. Dispositif de pesée selon l'une des revendications 1, **caractérisé en ce qu'**une fonction de rectification dépendant du lieu est formée et mémorisée dans un dispositif d'analyse (12) sur la base de la mesure de la contrainte au cisaillement et d'un calibrage statique, laquelle fonction sert à la prise en considération du couplage de dérivation de force pendant la pesée dynamique.

3. Dispositif de pesée selon l'une des revendications 1 ou 2 , **caractérisé en ce que** des cellules de pesage (3) sont prévues comme dispositifs dynamométrique (3, 10), dont les signaux de pesée sont reliés entre eux de telle sorte que le poids des véhicules sur rails ou de parties de ceux-ci peut être calculé à partir des signaux de mesure.

4. Dispositif de pesée selon l'une quelconque des revendications précédentes, **caractérisé en ce que** les signaux d'au moins un capteur de contrainte au cisaillement (11) servent en même temps de commutateurs de rails, à partir desquels un début et une fin de wagon ou un début ou une fin de bogie sont déterminés dans le dispositif d'analyse (12) et à l'aide d'entraxes des essieux prédéfinis.

5. Dispositif de pesée selon l'une quelconque des revendications précédentes, **caractérisé en ce que** le capteur de contrainte au cisaillement (11) est réalisé comme oeil de mesure qui est agencé dans un perçage du rail (7) ou formé par des jauges d'allongement appliquées directement.

6. Dispositif de pesée selon l'une quelconque des revendications précédentes, **caractérisé en ce qu'**il est prévu dans le patin du rail, au moins avant le premier dispositif dynamométrique (3, 10), un évidement ouvert vers le bas verticalement ou obliquement, qui relie le rail de roulement (7) de façon articulée avec le ou les dispositifs dynamométriques (3, 10).

7. Dispositif de pesée selon l'une quelconque des revendications précédentes, **caractérisé en ce qu'**il est prévu dans le patin du rail, au moins avant le premier et/ou le dernier dispositif dynamométrique (3, 10), un évidement ouvert vers le bas verticalement ou obliquement, qui relie le rail de roulement (7) de façon articulée avec le ou les dispositifs dynamométriques (3, 10).

8. Dispositif de pesée selon l'une quelconque des revendications précédentes, **caractérisé en ce que** le dispositif dynamométrique (3, 10) est agencé pour chaque rail (7) entre le rail concerné (7) et une traverse.

9. Dispositif de pesée selon l'une quelconque des revendications précédentes, **caractérisé en ce que** la poutre transversale est réalisée comme traverse de pesée (2, 8), dans laquelle les dispositifs dynamoétrique (3, 10) sont intégrés et prennent appui sur une surface stabilisée.

10. Dispositif de pesée selon l'une quelconque des revendications précédentes, **caractérisé en ce que** le dispositif de pesée est constitué d'au moins une traverse de pesée (2, 8) ou d'une pluralité de traverses de pesée (2, 8).

11. Dispositif de pesée selon l'une quelconque des revendications précédentes, **caractérisé en ce que** la traverse de pesée (2, 8) est constituée de béton armé ou d'un autre matériau prévu pour la fabrication de traverses.

12. Dispositif de pesée selon l'une quelconque des revendications précédentes, **caractérisé en ce que** chaque traverse de pesée (2, 8) comprend au moins deux évidements (4, 9) pour l'intégration des dispositifs dynamoùétrique (3, 10), qui sont prévus en dessous de l'assise du rail.

13. Dispositif de pesée selon l'une quelconque des revendications précédentes, **caractérisé en ce que** dans les évidements (4, 9) sont agencés des dispositifs dynamométriques (3, 10) dont la partie d'arrivée de force (18) est reliée avec le rail (7) et la partie de sortie de force (21) avec la traverse (2, 8) par force et par moment.

14. Dispositif de pesée selon l'une quelconque des revendications précédentes, **caractérisé en ce que** le dispositif dynamométrique (3, 10) est fixé dans un élément de logement fixe (22) qui est soudé ou relié de façon rigide par d'autres moyens d'assemblage avec la traverses (2, 8).

15. Dispositif de pesée selon l'une quelconque des revendications précédentes, **caractérisé en ce que** le dispositif dynamométrique (3, 10) est relié à l'élément de logement (22) par un assemblage démontable, l'élément de logement (22) disposant d'une partie de fermeture pouvant être enlevée sur le haut ou sur le côté, par laquelle le dispositif dynamoùétrique (3, 10) peut être remplacé.

16. Dispositif de pesée selon l'une quelconque des revendications précédentes, **caractérisé en ce que** le dispositif dynamométrique (3, 10) est réalisé comme cellules de pesée des éléments de rétroaction de force (18,21).
